Europäisches Patentamt

European Patent Office

Office européen des brevets

(19)

(11) Veröffentlichungsnummer: **0 238 902 B1**

(12) **EUROPÄISCHE PATENTSCHRIFT**

(45) Veröffentlichungstag der Patentschrift: **24.07.91**

(51) Int. Cl.⁵: **C02F 3/10, C02F 3/12**

(21) Anmeldenummer: **87103042.5**

(22) Anmeldetag: **04.03.87**

(54) Verfahren und Vorrichtung zur biologischen Reinigung von Abwasser.

(30) Priorität: **24.03.86 DE 3609898**

(43) Veröffentlichungstag der Anmeldung:
**30.09.87 Patentblatt 87/40**

(45) Bekanntmachung des Hinweises auf die
Patenterteilung:
**24.07.91 Patentblatt 91/30**

(84) Benannte Vertragsstaaten:
**AT BE CH DE FR GB IT LI NL**

(56) Entgegenhaltungen:
**EP-A- 0 100 007**

(73) Patentinhaber: **Linde Aktiengesellschaft
Abraham-Lincoln-Strasse 21
W-6200 Wiesbaden(DE)**

(72) Erfinder: **Fuchs, Uwe
Heiterwangerstr. 46
W-8000 München 70(DE)**
Erfinder: **Wildmoser, Alfred
Flurstr. 12
W-8013 Haar(DE)**

(74) Vertreter: **Schaefer, Gerhard, Dr.
Linde Aktiengesellschaft Zentrale Patentabteilung
W-8023 Höllriegelskreuth(DE)**

**Beschreibung**

Die Erfindung betrifft ein verfahren zu biologischen Reinigung von Abwasser, bei dem das Abwasser in einem Belebungsbecken in Gegenwart von auf Trägerteilchen fixierter Biomasse mit Luft und/oder reinem Sauerstoff begast und anschließend in einer Nachklärung in gereinigtes Wasser und Belebtschlamm aufgetrennt wird, sowie eine Vorrichtung zur Durchführung des Verfahrens.

Bei trägergebundenen Reinigungsverfahren kommt es im Kern der Trägerteilchen allmählich zum Absterben der Biomasse, wodurch sich die Leistung der biologischen Abwasserreinigung verringert. Dieses Problem wird bisher dadurch gelöst, daß flexible Schaumstoffträger in einer externen Preßvorrichtung regeneriert werden. Dabei wird mineralisierte abgestorbene Biomasse aus Trägerteilchen entfernt und somit neue Ansiedlungsfläche geschaffen. Bei bekannten Verfahren nimmt beispielsweise ein Förderband die beladenen Trägerteilchen auf, führt sie einer Rollenpresse zu und wirft die nun leeren Trägerteilchen zurück in das Belebungsbecken.

Die Preßregenerierung ist jedoch mit einer starken mechanischen Beanspruchung der Trägerteilchen verbunden. Außerdem sind aufwendige Vorrichtungen dafür notwendig.

Aus der EP-A-0 100 007 ist ein Verfahren zur biologischen Reinigung von Abwasser in einem teilweise mit Trägerteilchen für die Biomasse gefüllten Belebungsbecken bekannt, bei dem die Trägerteilchen zur Regenerierung mittels einer Mammutpumpe aus dem Becken abgezogen und einer Rollenpreße zugeführt werden. Auch dieses Verfahren weist die mit der Preßregenerierung verbundenen Nachteile auf.

Aufgabe der vorliegenden Erfindung ist es daher, ein Verfahren zur Regenerierung von Trägerteilchen für Biomasse und eine Vorrichtung zur Durchführung des Verfahrens so auszugestalten, daß auf einfache und wirtschaftliche Weise eine weitgehende Regenerierung der Trägerteilchen erzielt werden kann und die Nachteile bisheriger Regenerierungsmethoden beseitigt werden.

Diese Aufgabe wird erfindungsgemäß dadurch gelöst, daß die Trägerteilchen zur Regenerierung zusammen mit dem umgebenden Abwasser in einem aus dem Belebungsbecken herausführenden Rohr beschleunigt werden, im letzten Viertel der Rohrstrecke ein Teil des umgebenden Abwassers von den Trägerteilchen getrennt wird, anschließend die Trägerteilchen in einem unten offenen Prallkasten schlagartig abgebremst werden und schließlich, derart regeneriert, in das Belebungsbecken fallengelassen werden.

Die Trägerteilchen werden zuerst auf eine angemessene Geschwindigkeit beschleunigt und dann schlagartig auf Null abgebremst. Gemäß der freiwerdenen kinetschen Energie wird dabei ein partielles Zusammenpressen der Trägerteilchen erreicht. Entsprechend der gewählten erreichbaren Geschwindigkeit können die Trägerteilchen bis auf etwa die Hälfte ihres Volumens zusammengepreßt werden. Durch die starke Abbremsung wird die Biomasse im Trägerteilchen aufgelockert und zum Teil ausgeschwemmt. Vorteilhafterweise werden die Trägerteilchen dabei auf eine Geschwindigkeit von 3 bis 30 Meter pro Sekunde beschleunigt, wobei sich ein bevorzugter Geschwindigkeitsbereich von 5 bis 25 Meter pro Sekunde erstreckt.

Als Beschleunigungseinrichtung dienen Mammutpumpen, wie sie zur Rückförderung der Trägerteilchen vom Ablaufsieb des Belebungsbeckens in das Belebungsbecken verwendet werden. Dies hat den Vorteil, daß die Rückfördereinrichtung durch eine einfache Maßnahme, nämlich durch Anbringen eines Prallkastens, zusätzlich noch als Regeneriervorrichtung genützt werden kann. Die erfindungsgemäße Regenerierungsmethode erfordert also im Gegensatz zu bisher angewandten Verfahren nur einen geringen Aufwand und ist daher auch wirtschaftlich interessant. Durch die im Belebungsbecken erfolgende Regenerierung wird die Abbauleistung erhöht und werden die Schlammeigenschaften verbessert. Wegen des nur partiellen Zusammendrückens der Trägerteilchen beim Abbremsen führt die erfindungsgemäße Methode nur zu einer geringen Materialbeanspruchung. Da die Regenerierung in der Regel während der gesamten Betriebszeit stattfindet, wird durch die ständige Auflockerung der Biomasse im Trägermaterial und der damit verbundenen teilweisen Ausschwemmung eine wirksame Regenerierung erreicht. Gleichzeitig werden die Trägerteilchen bei dem Regenerierungsprozeß durch die Abgabe abgestorbener Biomasse leichter, so daß unerwünschte Ablagerungen von zu stark mit Biomasse angereicherten Trägerteilchen am Boden des Belebungsbeckens vermieden werden.

Erfindungsgemäß ist vorgesehen, daß sich etwa das letzte Viertel der Beschleunigungsstrecke der Trägerteilchen und die Abbremseinrichtung außerhalb des Abwassers befindet, um eine Beeinträchtigung der durch partielles Zusammendrücken bewirkten Auflockerung und Ausschwemmung der Biomasse durch das umgebende Wasser zu vermeiden. Um möglichst hohe Regeneriergrade zu erzielen, wird möglichst viel Fördermedium (20 bis 70 %) in der Beschleunigungsstrecke abgetrennt, so daß die Energieabsorption vorwiegend durch die Trägerteilchen erfolgt. Als Fördermedium kommt beispielsweise Wasser in Betracht. Bei Denitrifikationsanlagen ist es zweckmäßig, die Trägerteilchen während des Aufpralls mit dem nitrathaltigen Abwasser-Belebtschlamm-Gemisch in Kontakt zu bringen, um Denitrifikationsvorgänge zu beschleunigen. Als Abbremseinrichtung sind Prallkästen ohne Boden vorgesehen, wodurch ein Verspritzen der Flüssigkeit vermieden wird.

Mit dem Verfahren kann durch Veränderung der Austrittsgeschwindigkeit der Trägerteilchen aus der Beschleunigungsstrecke die Biomassekonzentration in den Trägerteilchen gesteuert werden.

Das Verfahren kann in allen trägergebundenen Abwasserreinigungsverfahren zur Intensivierung des Reinigungsprozesses eingesetzt werden, wobei der Anteil der Trägerteilchen am Gesamtvolumen zwischen etwa 20 bis 80 Vol% liegen kann. Die Trägerteilchen können einen Durchmesser von 0,5 bis 50 mm besitzen. Als weitere Anwendungsmöglichkeit der Erfindung ist die Regenerierung von beladenem Filtermaterial bei Filtration mit Schaumstoff zu nennen. Die Trägerteilchen bzw. das Filtermaterial können dabei aus Polyurethanweichschaum, Harnstoff/Formaldehydharzen, Polyethylen, Polypropylen, Siliconpolymer oder ähnlichem bestehen.

Eine Vorrichtung zur Durchführung des erfindungsgemäßen Verfahrens umfaßt ein Belebungsbecken, das einen Zulauf für zu reinigendes Abwasser und einen Ablauf für gereinigtes Abwasser aufweist, wobei in dem Belebungsbecken Trägerteilchen für die Biomasse angeordnet sind.

Erfindungsgemäß ist im Belebungsbecken ein aus dem Belebungsbecken herausragendes, mit einer Druckluftzufuhr versehenes Rohr angeordnet, das im letzten Viertel der Rohrstrecke oberhalb der Wasseroberfläche ein Lochblech aufweist, und das Rohr oberhalb der Wasseroberfläche in einem unten offenen Prallkasten endet.

Nachfolgend ist ein in zwei Figuren schematisch dargestelltes Ausführungsbeispiel näher beschrieben.

Es zeigen:

Figur 1 ein Belebungsbecken mit Regeneriereinrichtung;

Figur 2 einen Prallkasten als Abbremseinrichtung.

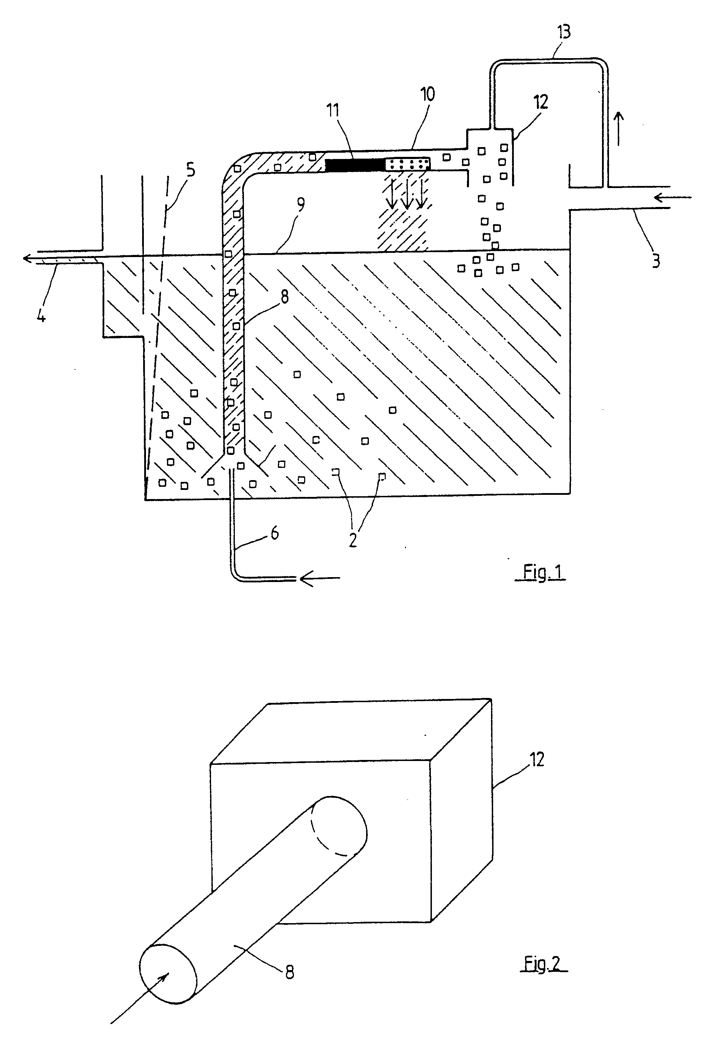

In Figur 1 ist mit 1 ein volldurchmischtes Belebungsbecken zur biologischen Abwasserreinigung bezeichnet. In dem Belebungsbecken 1 sind Trägerteilchen 2, z.B. Stoffteilchen aus Polyurethanweichschaum, für die Mikroorganismen frei beweglich angeordnet. Das Gesamtvolumen des Trägermaterials entspricht einem Volumenanteil von 25 % des Volumes des Belebungsbeckens 1.

Das zu behandelnde Abwasser wird über einen Zulauf 3 in das Belebungsbecken 1 eingeleitet, während das behandelte Abwasser über einen im oberen Bereich des Belebungsbeckens 1 angeordneten Ablauf 4 abgezogen wird, dem eine Trenneinrichtung 5 zum Zurückhalten der einzelnen Trägerteilchen vorgeschaltet ist, die beispielsweise aus einem einfachen Sieb bestehen kann.

In das Belebungsbecken 1 ist eine Druckluftzuleitung 6 eingeführt, die an einem trichterförmigen Rohrabschnitt 7 endet. Durch Druckluftzufuhr werden die Trägerteilchen 2 in Nähe des Rohrabschnittes 7 gemeinsam mit dem umgebenden Abwasser in den trichterförmingen Rohrabschnitt 7 gedrückt und zusammen mit dem Wasser im anschließenden Rohr 8 beschleunigt. Das Rohr 8 ragt aus der Wasseroberfläche 9 heraus. Im letzten Viertel der Rohrstrecke ist ein Lochblech 10 mit einer Blende 11 angebracht, um die Trägerteilchen vom umgebenden Wasser zu trennen. Das Wasser fließt durch die Löcher, die einen Druchmesser von 7 mm aufweisen, aus dem Rohr ab, während die Trägerteilchen mit etwa 25 mm Durchmesser im Rohr zurückgehalten werden. Das Lochblech kann mit der Blende 11 mehr oder weniger weit zugedeckt werden, so daß der Anteil des abgetrennten Wassers variierbar ist. Die Trägerteilchen gelangen in einen Prallkasten 12, der nach unten offen ist, prallen auf die Wände des Prallkastens 12 auf, werden dadurch schlagartig abgebremst und fallen, derart regeneriert, in das Belebungsbecken zurück. Um mögliche Rückstände von ausgeschwemmter Biomasse an den Prallkastenwänden abspülen zu können, wird ein Teil des Abwassers, etwa 10 bis 20 Vol%, von der Abwasserzuleitung abgezweigt und über eine Spülwasserleitung 13 in den Prallkasten 12 geführt.

Figur 2 zeigt schematisch einen Prallkasten ohne Boden. Mit 8 wird wieder das Beschleunigungsrohr für die Trägerteilchen bezeichnet.

Nachstehend sind Zahlenangaben für ein Auslegungsbeispiel einer nach dem erfindungsgemäßen Verfahren betriebenen Belebungsanlage aufgeführt.

Belebungsbeckenvolumen: 500 m³(voll durchmischt)

Trägermaterialkonzentration: 25 Vol%

Beckentiefe: 4,5 m

Rohrdurchmesser: 200 mm

Luftdurchsatz: 300 m³/Stunde

Förderleistung: 200 m³/Stunde

Austrittsgeschwindigkeit aus der Beschleunigungsstrecke: 5 m/Sek. Wasserabtrennung: ca. 70 % (variierbar)

Prallkastenabmessungen: 0,8 m x 0,3 m x 0,6 m (nach unten offen)

## Patentansprüche

1. Verfahren zur biologischen Reinigung von Abwassser, bei dem das Abwasser in einem Belebungsbecken in Gegenwart von auf Trägerteilchen fixierter Biomasse mit Luft und/oder reinem Sauerstoff begast und anschließend in einer Nachklärung in gereinigtes Wasser und Belebtschlamm aufgetrennt wird, dadurch gekennzeichnet, daß die Trägerteilchen (2) zur Regenerierung zusammen mit dem umgebenden Abwasser in einem aus dem Belebungsbecken herausführenden Rohr (8) beschleunigt werden, im letzten Viertel der Rohrstrecke ein Teil des umgebenden Abwassers von den Trägerteilchen (2) abgetrennt wird, anschließend die Trägerteilchen (2) in einem unten offenen Prallkasten (12) schlagartig abgebremst werden und schließlich, derart regeneriert, in das Belebungsbecken fallengelassen werden.

2. Verfahren nach Anspruch 1, dadurch gekennzeichnet, daß der Prallkasten (12) mit einem Teil des zu reinigenden Abwasser gespült wird.

3. Vorrichtung zur Durchführung des Verfahrens nach Anspruch 1 oder 2 mit einem Belebungsbecken, das einen Zulauf für zu reinigendes Abwasser und einen Ablauf für gereinigtes Abwasser aufweist, wobei in dem Belebungsbecken Trägerteilchen für Biomasse angeordnet sind, dadurch gekennzeichnet, daß im Belebungsbecken ein aus dem Belebungsbecken herausragendes, mit einer Druckluftzufuhr versehenes Rohr (8) angeordnet ist, das im letzten Viertel der Rohrstrecke oberhalb der Wasseroberfläche (9) ein Lochblech (10) aufweist, und das Rohr (8) oberhalb der Wasseroberfläche (9) in einem unten offenen Prallkasten (12) endet.

4. Vorrichtung nach Anspruch 3, dadurch gekennzeichnet, daß der Prallkasten (12) eine Spülwasserleitung (13) aufweist, die mit dem Abwasserzulauf (3) in Verbindung steht.

## Claims

1. A method of biologically purifying sewage, wherein the sewage is treated with gas in an activated sludge tank in the presence of biomass fixed on carrier particles using air and/or pure oxygen and is then separated into purified water and activated sludge in a secondary sedimentation stage, characterised in that the carrier particles (2) which are to be regenerated are accelerated, together with the surrounding sewage, in a pipe (8) which leads out of the activated sludge tank, in the last quarter of the pipe-line a part of the surrounding sewage is separated from the carrier particles (2), the carrier particles (2) are then abruptly decelerated in an impact box (12) which is open at the bottom and finally, having been regenerated in this way, the carrier particles are dropped into the activated sludge tank.

2. A method as claimed in claim 1, characterised in that the impact box (12) is flushed with a part of the sewage which is to be purified.

3. A device for the execution of the method claimed in claim 1 or 2, comprising an activated sludge tank which is provided with an inlet for sewage which is to be purified and an outlet for purified sewage, where carrier particles for bio-mass are arranged in the activated sludge tank, characterised in that a pipe (8) is arranged in the activated sludge tank which pipe (8) projects from the activated sludge tank, is provided with a compressed air supply and, in the last quarter of the pipe-line, is provided with a perforated plate (12) above the water surface (9), and the pipe (8) terminates above the water surface (9) in an impact box (12) which is open at the bottom.

4. A device as claimed in claim 3, characterised in that the impact box (12) is provided with a flushing water pipe-line (13) which is connected to the sewage inlet (3).

## Revendications

1. Procédé d'épuration biologique d'eaux usées, dans lequel l'eau usée est traitée au moyen d'air et/ou d'oxygène pur dans un bassin d'activation en présence d'une biomasse fixée sur des particules de support, et puis ensuite, dans une opération de clarification ultérieure, est séparée en eau épurée et en boue active, caractérisé en ce que les particules de support (2), pour leur régénération, sont accélérées avec l'eau usée environnante, dans un tube (8) sortant du bassin d'activation, en ce que, dans le dernier tronçon de l'étendue du tube, une partie de l'eau usée environnante est séparée des particules de support (2), puis en ce qu'ensuite les particules de support (2) sont freinées brutalement dans un caisson de chocs (12) ouvert vers le bas et en ce qu'enfin, on les laisse retomber, ainsi régénérées, dans le bassin d'activation.

2. Procédé selon la revendication 1, caractérisé en ce que le caisson de chocs (12) est rincé au moyen d'une partie de l'eau usée à épurer.

3. Dispositif pour la mise en oeuvre du procédé selon la revendication 1 ou 2, comportant un bassin d'activation qui présente une entrée pour l'eau usée à épurer et une sortie pour l'eau usée épurée, des particules de support destinées à la biomasse étant disposées dans le bassin d'activation, caractérisé en ce que, dans le bassin d'activation, est disposé un tube (8) sortant du bassin d'activation et muni d'une alimentation en air comprimé, qui comporte dans le dernier quart du tronçon de tube, au-dessus de la surface (9) de l'eau, une tôle perforée (10) et en ce que le tube (8) se termine, au-dessus de la surface (9) de l'eau, dans un caisson de chocs (12) ouvert vers le bas.

4. Dispositif selon la revendication 3, caractérisé en ce que le caisson de chocs (12) comporte un conduit d'eau de rinçage (13), qui est raccordé à l'alimentation en eau usée (3).

Fig. 1

Fig. 2